# EUROPEAN PATENT SPECIFICATION

(11) **EP 3 858 583 B1**
(45) Date of publication and mention of the grant of the patent: **27.03.2024**
(21) Application number: 21153602.4
(22) Date of filing: 26.01.2021
(51) Int. Cl.: B29C 65/02, B65B 51/30, B29K 101/12

(54) **PERFECTED SEALING ASSEMBLY FOR A UNIT FOR FORMING AND FILLING SACHETS**
PERFEKTIONIERTE SIEGELANORDNUNG FÜR EINE EINHEIT ZUM FORMEN UND FÜLLEN VON BEUTELN
ENSEMBLE DE SCELLAGE PERFECTIONNÉ POUR UNE UNITÉ PERMETTANT DE FORMER ET DE REMPLIR DES SACHETS

(30) Priority: 30.01.2020 IT 202000001774
(43) Date of publication of application: 04.08.2021
(73) Proprietor: Universal Pack S.r.l., 47842 San Giovanni in Marignano (RN) (IT)
(72) Inventor: Donati, Pietro, 47842 San Giovanni in Marignano (RN) (IT)
(74) Representative: Petraz, Gilberto Luigi

(56) References cited:
- EP-A2- 2 483 160
- US-A- 2 982 066
- US-A- 3 738 081
- US-A- 5 778 641

## Description

### FIELD OF THE INVENTION

The present invention concerns a sealing assembly for a unit for forming and filling sachets. In particular, the invention concerns a sealing assembly for sealing the material of the sachets transversely with respect to a direction of feed. The unit for forming and filling sachets is in particular intended for an apparatus for packaging sachets containing, by way of non-restrictive example, food, pharmaceutical or cosmetic products.

### BACKGROUND OF THE INVENTION

In apparatuses for packaging substances into sachets, it is known to feed the material of which the sachets are made, generally heat-sealable and in the form of a film, so as to form the sachets and close them hermetically by sealing them. The seals for closing the sachets provide a longitudinal seal along the respective opposite edges, which closes the sachet longitudinally along its entire length, and two transverse seals, which close the sachet in correspondence with both its ends. The longitudinal and transverse directions are to be understood with respect to the direction of feed of the film of heat-sealable material.

The sealing steps are critical, as they affect the hermetic seal of the sachet, which can be fundamental, depending on the type of substance packaged. Take pharmaceutical or cosmetic products for example, whose properties must be preserved from all types of pollution or contamination from the external environment.

The biggest problems are usually found in transverse seals. Known sealing assemblies for carrying out transverse seals usually comprise facing and counter-rotating sealing heads, and between which the film with which the sachets are made is continuously fed, already disposed in a cylindrical or substantially cylindrical shape.

One disadvantage of known sealing assemblies comes precisely from the rotation movement with which the sealing heads are driven. This rotation movement means that at the time of sealing, the contact between the sealing heads and the film to be sealed is limited to a very localized area, ideally a rectilinear portion of limited height, instead of having a contact surface with a greater height. Due to the rotational movement, therefore, the sealing takes place through this zone of localized contact which, during the sealing itself, moves along a predetermined segment of the path followed by the film to be sealed.

It should be borne in mind that in the field of packaging substances, the sealing step occurs for a very short time, and in the case of sachets, up to four layers of film must also be sealed, in correspondence with the longitudinal closure of the sachets. The resulting seals are often weak, non-homogeneous and sometimes subject to breakage.

US5778641 discloses a sealing assembly comprising two sealing bodies rotatably mounted on a respective pin, each in turn pivoted on a respective rotating member. In this way, the sealing bodies move following a translation along a circular trajectory. However, the structure of the mechanism does not guarantee an optimal reciprocal orientation of the sealing bodies, and no system is provided that is able to detect anomalous situations in the functioning of the sealing assembly.

US2982066 shows a sealing assembly in which two counter-facing sealing elements are linearly translated when opening and closing, and are each equipped with a knurled sealing surface.

EP2483160 shows a plant for wrapping coffee capsules in an airtight wrapping made with a heat-sealable film. The plant comprises a sealing station which provides two counter-rotating heads, and which therefore have the disadvantages mentioned above.

US3738081 discloses a sealing assembly comprising two facing heads which are translated along a substantially circular trajectory so as to transversely seal a tube of continuously fed heat-sealable film. In this sealing assembly, however, the sealing heads perform a punctual sealing of the film, that is, in correspondence with only one sealing position.

There is therefore a need to perfect a sealing assembly for a unit for forming and filling sachets that can overcome at least one of the disadvantages of the state of the art.

In particular, one purpose of the present invention is to provide a sealing assembly for a unit for forming and filling sachets which performs a robust seal in any operating condition, in particular also in the presence of a high execution speed and a high number and thickness of layers of film material to be sealed.

Another purpose of the present invention is to provide a sealing assembly for a unit for forming and filling sachets that is able to detect anomalies in the execution of the seal.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, the sealing assembly comprises two sealing bodies, each provided with a respective sealing head. The sealing heads are advantageously facing each other at least along a sealing segment located between the two sealing bodies. The sealing heads are moved following a linear translation path for at least the sealing segment as above.

Preferably, the sealing bodies are moved each one following a translation along a respective circular trajectory, in a specular manner and in opposite senses with respect to each other.

The sealing assembly also comprises at least one movement unit connected to the sealing bodies and able to move the latter and the sealing heads.

The sealing assembly can also comprise containing means configured to contain the movement unit, inside which the latter is enclosed, so as to be isolated from the rest of the sealing assembly. In this way, the movement unit is compact, isolated from the rest of the system and protected from external agents.

The movement unit comprises a pair of rotating members, each rotatable about a respective axis of rotation and on each of which there is mounted an eccentric pin. Each of the eccentric pins is connected to a respective sealing body. In this way, the pins act as a cam for guiding the sealing heads.

Preferably, in addition to the rotating members as above provided with eccentric pins, the sealing assembly comprises a guide unit, connected to the eccentric pins of both rotating members, so as to constrain the movement of the sealing bodies through the same rotating members. The guide unit comprises, by way of a non-limiting example, two guide rods parallel to each other.

Preferably, the guide unit comprises a first attachment body, in which the rods are attached, and a second sliding body, equipped with two sliding seatings each able to at least partly accommodate a respective rod of the first attachment body. The sliding seatings are preferably parallel to each other. Advantageously, the first attachment body is connected to the eccentric pin of a first rotating member and the second sliding body is connected to the eccentric pin of a second rotating member. In accordance with some embodiments, the sealing heads have a sealing surface disposed outside the sealing body, preferably with a substantially flat development. It can be provided that such sealing surfaces have some irregularities, for example they are knurled. Even more preferably, the sealing surfaces are knurled with knurls that are able be coupled together according to a same-shape coupling, for example of the male/female type.

According to the invention, the sealing assembly also provides the presence of a contact sensor, able to detect the first contact between the sealing heads and the film to be sealed, and to transmit the position of the sealing bodies at the moment of the first contact. This contact sensor, advantageously connected to one or both sealing bodies, acts as an anti-shock or anti-accident detector following malfunctions or jams of the apparatus.

According to one aspect, a method for sealing a film of heat-sealable material provides to feed such film in an intermediate position between two sealing bodies where a sealing segment is defined, each sealing body being equipped with a respective sealing head, and to move the sealing bodies for at least the segment where the sealing occurs, along a linear translation path. The movement of the sealing bodies, obtained by means of a movement unit connected to the sealing bodies and enclosed inside containing means, is synchronized with the feed of the film of heat-sealable material. The two sealing bodies translate in a specular manner with respect to the film to be sealed.

The two sealing bodies are oriented so as to have the two sealing heads facing each other.

According to the method of the invention, the corresponding angular position of the eccentrics is detected at the moment of the first contact between the sealing heads and the film to be sealed.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a perspective view, from above, of the sealing assembly according to one embodiment described here;
- fig. 2 is a cross-section view of a movement device of the sealing assembly of fig. 1, taken according to section plane II-II of fig. 1;
- fig. 3 is a perspective view, from below, of the same sealing assembly of fig. 1;
- figs. from 4 to 7 are schematic cross-section views of sealing bodies of the sealing assembly, during a possible operative sealing sequence, taken according to section plane IV-IV of fig. 1; and
- fig. 5A is an enlarged view of detail A of fig. 5.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF SOME EMBODIMENTS

We will now refer in detail to the possible embodiments of the present invention, of which one or more examples are shown in the attached drawings. Each example is supplied by way of illustration of the invention and shall not be understood as a limitation thereof. For example, one or more characteristics shown or described insomuch as they are part of one embodiment can be varied or adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

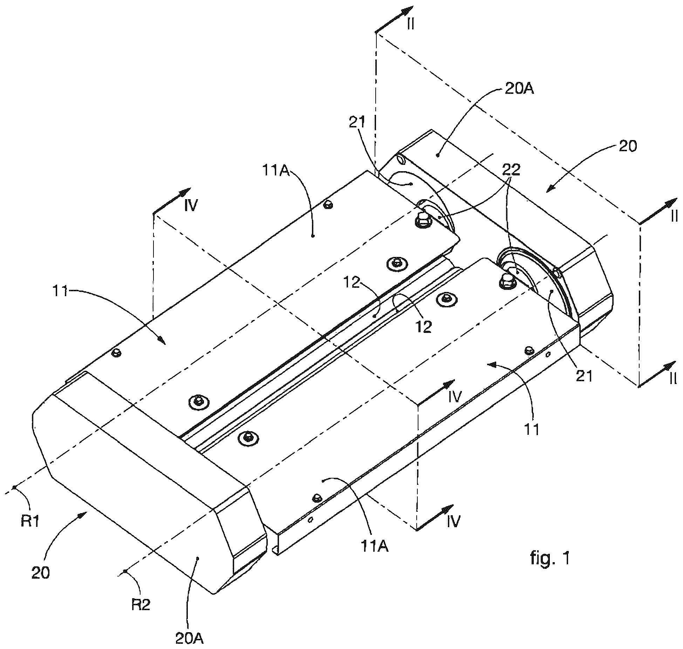

Fig. 1 shows a sealing assembly 10 according to one embodiment of the invention, which comprises two sealing bodies 11 each equipped with a corresponding sealing head 12. The two sealing bodies 11 are adjacent to each other, with the sealing heads 12 facing each other at least along a sealing segment, so as to be able to interact in order to seal, along the same sealing segment, a heat-sealable material, in particular in the form of a film F, which during use is fed between the sealing heads 12. The sealing segment is preferably oriented along the direction of feed of the film F of heat-sealable material. In the example shown, this is linear and oriented vertically, downward. The sealing segment advantageously has a height greater than the height of the sealing surfaces 12A, preferably the height of the sealing segment is at least double the height of the sealing surfaces 12A. By `sealing segment' we mean the path along which the sealing of the film F by the sealing heads 12 occurs.

It can be observed that the seal obtained has the same shape as the sealing surfaces 12A, that is, substantially rectangular and oriented perpendicular to the direction of feed of the film F. It can also be observed that the seal obtained with the sealing assembly described has a greater height, and therefore offers better mechanical sealing characteristics, compared to the seal obtained with the sealing assemblies of the state of the art, in which the sealing line has a lower height due to the localized contact between the sealing bodies.

The sealing bodies 11 shown have the shape of a substantially rectangular plate, the sealing heads 12 preferably being located along one side of the respective sealing body 11, preferably in correspondence with a long side, that is, one of the two opposite sides with a greater length than the other two sides.

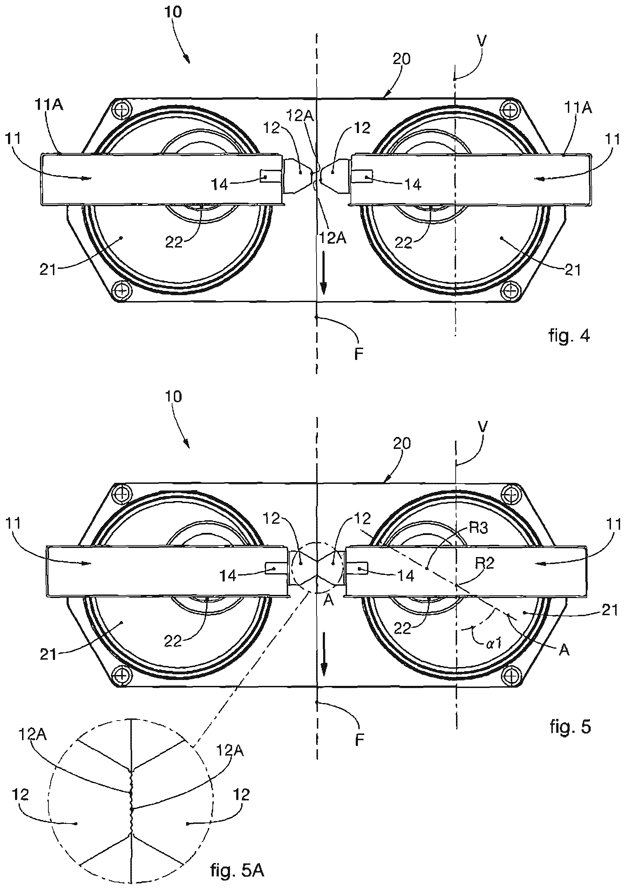

Preferably, the sealing bodies 11 are housed in a respective casing 11A (see also figs. 4 to 7) which defines a lower compartment able to house possible other functional and/or structural components of the sealing body 11.

In a known manner, each of the sealing bodies 11 is also equipped with functional elements which have a conventional use for the person of skill in the art, such as for example a motor unit to move it, and/or a gripping member for manual movement, which however, for simplicity, are not shown in the drawings and will not be described in detail here.

The sealing heads 12 each comprise a sealing surface 12A (fig. 4) located outside the sealing body 11. Obviously, the sealing surfaces 12A are configured so as to interact in order to perform the sealing, therefore they are located oriented toward each other, preferably facing each other so as to be able to come into reciprocal contact. More preferably, the sealing surfaces 12A are disposed parallel to each other in order to guarantee a correct interaction with the film compressed between them.

More precisely, the sealing heads 12 have a cross-section with a substantially trapezoidal shape, preferably with the short side forming the sealing surface 12A. Therefore the sealing surface 12A has a lower height than the height of the rest of the sealing head 12 (figs. 4 and 5). It should be noted that the height of the sealing surface 12A is such as to provide a sealing zone that is as extensive as possible, in a direction parallel to that of the feed of the film F of heat-sealable material.

According to some embodiments, the sealing surfaces 12A have a substantially flat development, and preferably have an irregular surface. By irregular surface we mean a surface that is not perfectly flat, for example with a knurl. In a particularly advantageous manner, the sealing surfaces 12A have knurls able to be coupled together, as can be seen from the enlarged detail of fig. 5A. For example, both sealing surfaces 12A of the sealing heads 12 each comprise a sequence of ridges and recesses complementary in shape with respect to each other. During use, the ridges as above comprised in the sealing surface of one of the sealing heads 12, which are similar to a male element, engage according to a same-shape coupling within the recesses comprised in the sealing surface of the other sealing head 12, which are instead similar to a female element.

In this way, the surface of reciprocal contact of the sealing heads 12, and therefore the sealing zone, is increased and a more stable contact with the film F to be sealed is also guaranteed, in particular preventing the sealing heads 12 from slipping along the generally smooth surface of the film F.

It should be noted that, according to some embodiments, the sealing heads 12 are mounted in a sliding manner on the respective sealing bodies 11, preferably with an elastic return member, schematically indicated in figs. 4-7 with reference number 14, and interposed between the sealing head 12 and the corresponding sealing body 11, and which can be elastically compressed.

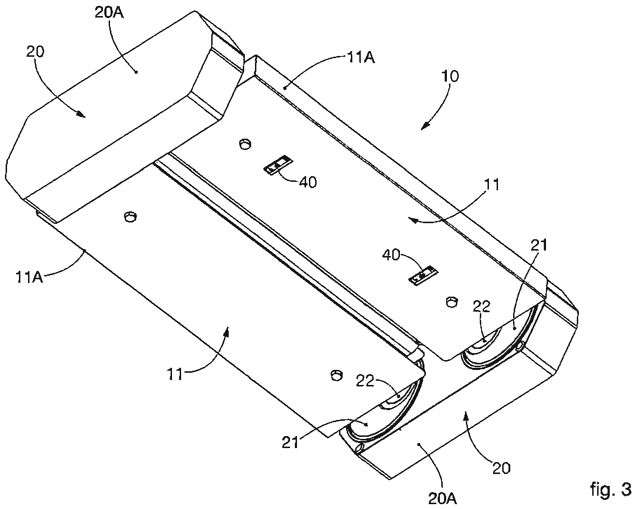

The sealing assembly 10 also comprises two movement units 20, each disposed at a respective longitudinal end of the sealing bodies 11 (fig. 1), that is, advantageously located transversely with respect to the sealing heads 12. The movement units 20 are contained in respective containing means 20A, which are therefore also disposed at a respective longitudinal end of the sealing assembly 10 (figs. 1 and 3). The containing means 20A are preferably configured as a box-shaped body, in particular hermetically closed in order to isolate its contents from the outside. Obviously, this box-shaped body 20A has a shape and sizes such that it is possible to accommodate the movement unit 20 inside it.

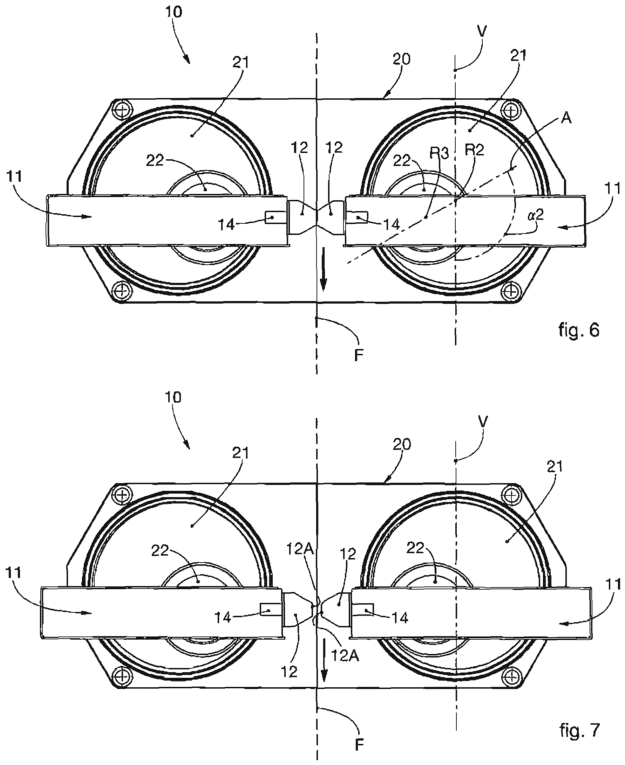

Each movement unit 20 comprises a pair of rotating members 21 rotatable about a respective axis of rotation R1, R2 (fig. 1), and each equipped with a respective eccentric pin 22, on each of which a respective sealing body 11 is mounted. The eccentric pin 22 is mounted rotatable on the rotating member 21, being able to rotate about its own axis of rotation R3 (figs. 5 and 6).

Preferably, the sealing surfaces 12A are oriented parallel with respect to the axis of rotation R1, R2 of the rotating member 21 on which the corresponding sealing body 11 is mounted. Advantageously, the rotating members 21 are positioned side by side and oriented in the same direction, so as to have their own axes of rotation R1, R2 parallel to each other. Even more advantageously, the rotating members 21 are positioned so as to have their axis of rotation R1, R2 parallel to the film F of heat-sealable material while it is being fed (see figs. 4-7).

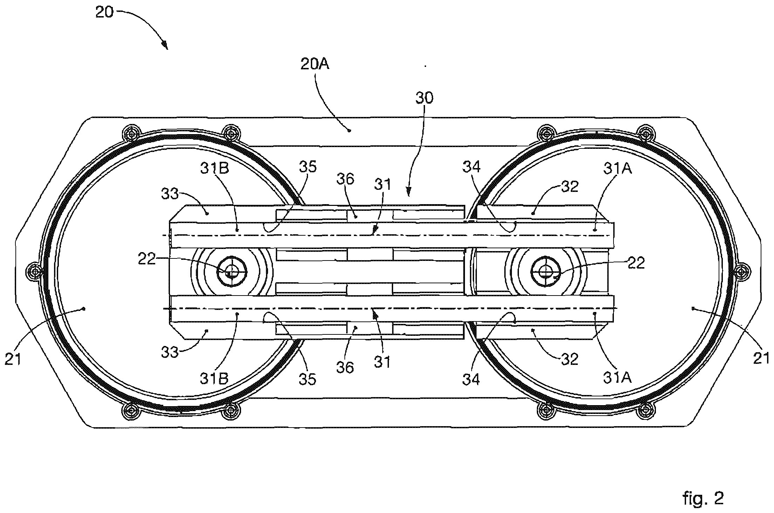

A guide unit 30 attached to both eccentric pins 22 is disposed inside each of the movement units 20. This guide unit 30 is configured to maintain the reciprocal orientation of the sealing bodies 11, that is, the orientation of one with respect to the other and vice versa (fig. 2), unchanged. For this purpose, the guide unit 30 comprises a pair of rods 31, preferably parallel to each other. In accordance with some embodiments, the guide unit 30 comprises a first attachment body 32, connected to the eccentric pin 22 of a first rotating member 21 (on the right in fig. 2), and a second sliding body 33, connected to the eccentric pin 22 of a second rotating member 21 (on the left in fig. 2).

The first attachment body 32 comprises a pair of attachment seatings 34 in which the rods 31 are attached, preferably in correspondence with a first portion 31A thereof. The second sliding body 33, on the other hand, comprises two sliding seatings 35 for the rods 31, in which the rods 31 are housed sliding, in particular a second portion 31B of the rods, in the proximity of one end of the rods on the opposite side with respect to the other end in which the first portion 31A is disposed.

In order to keep the rods 31 parallel to each other, it is advantageous to provide that the attachment seatings 34 are parallel to each other, and that the sliding seatings 35 are parallel to each other, and that, during use, each attachment seating 34 is aligned with a respective sliding seating 35. In order to further guarantee the parallelism between the rods 31, the guide unit 30 comprises, inside each of the sliding seatings 35, the sliding members 36, for example some recirculating ball bearings.

It can be surmised that the eccentric pins 22 of the rotating members 21 act as a guide cam for a respective sealing body 11 to which they are connected, and that these are constrained in their movement by the guide unit 30 described above, connected to both the eccentric pins 22.

It should be noted that, like the rest of the movement unit 20, the guide unit 30 is also enclosed inside the box 20A.

This structure of the guide unit 30 allows to keep the sealing bodies 11 always oriented in the same direction, and in particular parallel and aligned with each other. Moreover, thanks to the pair of rotating members 21 to which the sealing bodies 11 are connected, during use these perform a translation movement along a circular trajectory. Another advantage of the guide unit 30 is that it has a simple and above all compact structure, which allows to reduce the sizes of the movement units 20.

It should be noted that by translation movement we mean, in the context of this description, a rigid movement of a body that occurs in such a way that each straight line passing through any two of its points maintains its direction unchanged.

More precisely, each sealing body 11 performs a translation along a respective circular trajectory, centered on the axis of rotation R1, R2 of the respective rotating member 21 on which the eccentric pin 22 is mounted. Due to the presence of the guide unit 30 provided with two parallel rods 31, the position of each of the eccentric pins 22 is constrained to the position of the other. It follows that, since the rotating members 21 are driven in rotation in opposite senses, the eccentric pins 22 rotate symmetrically with respect to a plane of symmetry of the two rotating members 21. In other words, the eccentric pins 22, and therefore also the sealing bodies 11, are displaced in a specular manner with respect to each other.

According to some embodiments, the sealing assembly 10 also comprises at least one first contact sensor 40 (fig. 3) able to detect the first contact between the sealing heads 12 and the film F, and to communicate the corresponding angular position α of at least one of the eccentric pins 22. Preferably, the first contact sensor 40 is included in a sealing body 11. In the example of fig. 3, the sealing assembly 10 comprises two first contact sensors 40 both included in the same sealing body 11. It is however possible to provide that each sealing body 11 is equipped with a respective sensor 40, or with several sensors 40. The functioning of the first contact sensors 40 will be explained below.

Figs. 4 to 7 show a succession of operating positions of the sealing bodies 11 during a step of sealing a film F of thermoplastic material. It should be noted that the rotating member 21 located on the left is rotated clockwise while the rotating member on the right is rotated counterclockwise. The film F is fed vertically in an intermediate position, preferably central, between the two sealing bodies 11, from the top downward. More preferably, the film F of thermoplastic material is fed along a plane of symmetry between the two rotating members 21.

In fig. 4, the eccentric pins 22 are in a substantially vertical position above the axis of rotation of their rotating member 21, the two sealing bodies 11 are at the beginning of a step of descent and reciprocal approach, due to the rotation in opposite senses of the same rotating members 21, until the sealing surfaces 12A of the two sealing heads 12 come into contact with the film F of thermoplastic material to be sealed, as shown in fig. 5.

This position described in fig. 5 is also called position of "first contact" between the sealing heads 12, and corresponds to an angular position α1 of the eccentric pins 22 predetermined with respect to the vertical. At this point, the sealing of the film F begins, which is tightened between the two sealing surfaces 12A of the sealing heads 12. It should be noted that the sealing occurs on a zone the height of which is equal to the height of the sealing surfaces 12A.

It should be noted that in fig. 4, but also subsequently, the angle α is measured between the vertical V that comprises the axis of rotation R2 of the rotating member 21, and a theoretical axis A that passes both from the same axis of rotation R2 of the rotating member 21, and also from the axis of rotation R3 of the eccentric pin 22.

By continuing the rotation of the rotating members 21 as described above, the sealing bodies 11 continue their descent, in a manner synchronized with the downward feeding speed of the film F. In this way, the sealing surfaces 12A remain in contact with the same zone of the film F while the sealing bodies 11 and the film F continue their downward movement. In the meantime, the sealing heads 12 are compressed against the film and the compression is partly absorbed by the return members 14 located between the heads 12 and the sealing bodies 11, as explained above.

The sealing heads 12 remain in contact with the film F until the eccentric pins 22 reach a second angular position α2 with respect to the vertical, shown in fig. 6. At this point, the sealing step ends and the sealing heads 12 are about to be separated. It should be noted that during the displacement of the eccentric pins 22 between the position α1, as shown in fig. 5, and the position α2, as shown in fig. 6, the same zone of the film F remains tightened between the sealing surfaces 12A of the two sealing heads 12, thus guaranteeing a safe and robust seal, both due to the height of the sealed zone, and also due to the relatively long time during which the sealing was performed; a time during which the sealing heads 12 have translated together along a substantially linear path. This substantially linear path, the ends of which can be seen respectively in figs. 5 and 6 as above, is also called sealing segment.

In fig. 7, the eccentric pins 22 are in a substantially downward vertical position with respect to the axis of rotation of the corresponding rotating member 21, the sealing is completed and the sealing bodies 11 begin a step of upward movement and reciprocal distancing, outside the axes of rotation R1, R2 of the rotating members 21, in order to return to the position shown in fig. 4 and therefore start a new step of sealing a subsequent zone of the film F, always fed downward.

Returning to the first contact sensor 40, in theory, the angular position α detected by the sensor corresponds to the predetermined angular position α1 of first contact, described above. It can be surmised that, if the angular position α detected by the sensor does not correspond precisely to the expected value of the angle α1, an anomaly situation is detected, or identified, which can cause the sealing assembly 10 to stop, for example in an automatic manner. This first contact sensor is used as a safety device capable of detecting, in an indirect manner, possible collisions between components of the sealing assembly 10, or anomalies such as the presence of foreign bodies in the zone to be sealed, or thicknesses of the film that do not correspond to what initially planned. In fact, all these events can suggest the fact that the point of first contact between the sealing heads 12 is slightly ahead, or delayed, with respect to the point of first contact envisaged, in the event that no anomalies or malfunctions occur.

It is clear that modifications and/or additions of parts or steps may be made to the sealing assembly and to the corresponding sealing method as described heretofore, without departing from the field and scope of the present invention as defined by the claims.

It is also clear that, although the present invention has been described with reference to some specific examples, a person of skill in the art shall certainly be able to achieve many other equivalent forms of sealing assembly, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Sealing assembly (10) comprising
- two sealing bodies (11) which each comprise a corresponding sealing head (12), said sealing heads (12) being oriented toward each other along at least one sealing segment located between the two sealing bodies (11);
- at least one movement unit (20) connected to said sealing bodies (11) and able to move said sealing bodies (11) and said sealing heads (12);
wherein said movement unit (20) comprises a pair of rotating members (21), each rotatable about a respective axis of rotation (R1, R2), on each of which there is mounted a respective eccentric pin (22) connected to a respective sealing body (11), and which are configured so as to move said sealing heads (12) following a linear translation path for at least said sealing segment;
said sealing assembly being **characterized in that** it comprises at least one first contact sensor (40) able to detect the angular position (α) of at least one eccentric pin (22) at the moment of first contact between said sealing heads (12) and a film (F) of heat-sealable material.

2. Sealing assembly (10) as in claim 1, **characterized in that** each of the sealing heads (12) comprises a sealing surface (12A) disposed outside the corresponding sealing body (11) and having a substantially flat development.

3. Sealing assembly (10) as in claim 2, **characterized in that** the sealing surfaces (12A) have knurls which are reciprocally couplable.

4. Sealing assembly (10) as in any claim hereinbefore, **characterized in that** it comprises, in the movement unit (20), a guide unit (30) connected to an eccentric pin (22) of a respective rotating member (21), and comprising two guide rods (31) parallel to each other.

5. Sealing assembly (10) as in claim 4, **characterized in that** the guide unit (30) is connected to the eccentric pins (22) of both rotating members (21).

6. Sealing assembly (10) as in claim 4 or 5, **characterized in that** the guide unit (30) comprises a first attachment body (32), in which the guide rods (31) are attached, and a second sliding body (33), provided with two sliding seatings (35) each able to at least partly accommodate a respective guide rod (31) of the first attachment body (32).

7. Sealing assembly (10) as in claim 6, **characterized in that** the first attachment body (32) is connected to the eccentric pin (22) of a first rotating member (21) and the second sliding body (33) is connected to the eccentric pin (22) of a second rotating member (21).

8. Sealing assembly (10) as in any claim hereinbefore, **characterized in that** the sealing body (11) comprises an elastic return member (14) interposed between said sealing body (11) and the corresponding sealing head (12).

9. Sealing assembly (10) as in any claim hereinbefore, **characterized in that** it comprises containing means (20A) configured to contain at least said movement unit (20).

10. Sealing assembly (10) as in claim 9, **characterized in that** the containing means (20A) comprise a hermetically closed box-shaped body.

11. Sealing assembly (10) as in any claim hereinbefore, **characterized in that** the first contact sensor (40) is included in a sealing body (11).

12. Sealing assembly (10) as in claim 11, **characterized in that** it comprises at least two first contact sensors (40) included in a same sealing body (11).

13. Sealing assembly (10) as in claim 11, **characterized in that** it comprises at least two first contact sensors (40) each included in a respective sealing body (11).

14. Method for sealing a film (F) of heat-sealable material by means of a sealing assembly (10) comprising two sealing bodies (11) each equipped with a respective sealing head (12), in which said sealing heads (12) are oriented toward each other along at least one sealing segment, said method providing to move said sealing bodies (11) and said sealing heads (12) by means of a movement unit (20) comprising a pair of rotating members (21), each rotatable about a respective axis of rotation (R1, R2), on each of which there is mounted a respective eccentric pin (22) connected to a respective sealing body (11), said movement unit (20) being enclosed within containing means (20A), wherein said moving provides to follow a linear translation, at least along said sealing segment;
said method being **characterized in that** it provides a step of detecting the angular position (α) of at least one of the eccentric pins (22) at the moment of the first contact between the sealing heads (12) and the film (F) of heat-sealable material.

15. Method as in claim 14, **characterized in that** an anomaly situation is identified when the angular position (α) detected at the moment of the first contact between the sealing heads (12) and the film (F) of heat-sealable material does not correspond to a predetermined angular position (α1).

## Patentansprüche

1. Siegelungseinrichtung (10), welche aufweist
- zwei Siegelungskörper (11), die jeweils einen korrespondierenden Siegelungskopf (12) aufweisen, wobei die besagten Siegelungsköpfe (12) entlang mindestens eines Siegelungssegments, das zwischen den zwei Siegelungskörpern (11) angeordnet ist, zueinander hin ausgerichtet sind;
- mindestens eine Bewegungseinheit (20), welche mit den besagten Siegelungskörpern (11) verbunden ist und welche imstande ist, die besagten Siegelungskörper (11) und die besagten Siegelungsköpfe (12) zu bewegen;
wobei die besagte Bewegungseinheit (20) ein Paar Drehelemente (21) aufweist, die jeweils um eine jeweilige Drehachse (R1, R2) drehbar sind und wobei an jeder von diesen ein jeweiliger exzentrischer Stift (22) montiert ist, der mit einem jeweiligen Siegelungskörper (11) verbunden ist, und welche eingerichtet sind, um die besagten Siegelungsköpfe (12) einem linearen Translationspfad folgend für mindestens das besagte Siegelungssegment zu bewegen;
wobei die besagte Siegelungseinheit **dadurch gekennzeichnet ist, dass** sie mindestens einen ersten Kontaktsensor (40) aufweist, der imstande ist, die Winkelposition (α) von mindestens einem exzentrischen Stift (22) im Moment eines ersten Kontakts zwischen den besagten Siegelungsköpfen (12) und einer Schicht (F) aus heißsiegelbarem Material zu detektieren.

2. Siegelungseinrichtung (10) gemäß Anspruch 1, **dadurch gekennzeichnet, dass** jeder der Siegelungsköpfe (12) eine Siegelungsfläche (12A) aufweist, die außerhalb des korrespondierenden Siegelungskörpers (11) angeordnet ist und die eine im Wesentlichen flache Entwicklung hat.

3. Siegelungseinrichtung (10) gemäß Anspruch 2, **dadurch gekennzeichnet, dass** die Siegelungsflächen (12A) Rändelungen haben, die wechselseitig koppelbar sind.

4. Siegelungseinrichtung (10) gemäß irgendeinem vorstehenden Anspruch, **dadurch gekennzeichnet, dass** sie in der Bewegungseinheit (20) eine Führungseinheit (30) aufweist, die mit einem exzentrischen Stift (22) eines jeweiligen Drehelements (21) verbunden ist und die zwei zueinander parallele Führungsstangen (31) aufweist.

5. Siegelungseinrichtung (10) gemäß Anspruch 4, **dadurch gekennzeichnet, dass** die Führungseinheit (30) mit den exzentrischen Stiften (22) beider Drehelemente (21) verbunden ist.

6. Siegelungseinrichtung (10) gemäß Anspruch 4 oder 5, **dadurch gekennzeichnet, dass** die Führungseinheit (30) einen ersten Anbringungskörper (32), in dem die Führungsstangen (31) angebracht sind, und einen zweiten Schiebekörper (33), der mit zwei Schiebesitzen (35) versehen ist, die jeweils imstande sind, eine jeweilige Führungsstange (31) des ersten Anbringungskörpers (32) zumindest teilweise unterzubringen, aufweist.

7. Siegelungseinrichtung (10) gemäß Anspruch 6, **dadurch gekennzeichnet, dass** der erste Anbringungskörper (32) mit dem exzentrischen Stift (22) eines ersten Drehelements (21) verbunden ist und der zweite Schiebekörper (33) mit dem exzentrischen Stift (22) eines zweiten Drehelements (21) verbunden ist.

8. Siegelungseinrichtung (10) gemäß irgendeinem vorstehenden Anspruch, **dadurch gekennzeichnet, dass** der Siegelungskörper (11) ein elastisches Rückstellelement (14) aufweist, das zwischen dem besagten Siegelungskörper (11) und dem korrespondierenden Siegelungskopf (12) angeordnet ist.

9. Siegelungseinrichtung (10) gemäß irgendeinem vorstehenden Anspruch, **dadurch gekennzeichnet, dass** sie ein Aufnahmemittel (20A) aufweist, das eingerichtet ist, um zumindest die besagte Bewegungseinheit (20) aufzunehmen.

10. Siegelungseinrichtung (10) gemäß Anspruch 9, **dadurch gekennzeichnet, dass** das Aufnahmemittel (20A) einen hermetisch geschlossenen kastenförmigen Körper aufweist.

11. Siegelungseinrichtung (10) gemäß irgendeinem vorstehenden Anspruch, **dadurch gekennzeichnet, dass** der erste Kontaktsensor (40) in einem Siegelungskörper (11) enthalten ist.

12. Siegelungseinrichtung (10) gemäß Anspruch 11, **dadurch gekennzeichnet, dass** sie mindestens zwei erste Kontaktsensoren (40) aufweist, die in einem gleichen Siegelungskörper (11) enthalten sind.

13. Siegelungseinrichtung (10) gemäß Anspruch 11, **dadurch gekennzeichnet, dass** sie mindestens zwei erste Kontaktsensoren (40) aufweist, die jeweils in einem jeweiligen Siegelungskörper (11) enthalten sind.

14. Verfahren zum Siegeln einer Schicht (F) aus heißsiegelbarem Material mittels einer Siegelungseinrichtung (10), die zwei Siegelungskörper (11) aufweist, die jeweils mit einem jeweiligen Siegelungskopf (12) versehen sind, wobei die besagten Siegelungsköpfe (12) entlang mindestens eines Siegelungssegments zueinander hin ausgerichtet sind, wobei das besagte Verfahren vorsieht, die besagten Siegelungskörper (11) und die besagten Siegelungsköpfe (12) mittels einer Bewegungseinheit (20) zu bewegen, die ein Paar Drehelemente (21) aufweist, die jeweils um eine jeweilige Drehachse (R1, R2) drehbar sind und wobei an jeder von diesen ein jeweiliger exzentrischer Stift (22) montiert ist, der mit einem jeweiligen Siegelungskörper (11) verbunden ist, wobei die besagte Bewegungseinheit (20) innerhalb eines Aufnahmemittels (20A) eingeschlossen ist, wobei das besagte Bewegen vorsieht, einer linearen Translation zumindest entlang des besagten Siegelungssegments zu folgen;
wobei das besagte Verfahren **dadurch gekennzeichnet ist, dass** es einen Schritt des Detektierens der Winkelposition (α) von mindestens einem der exzentrischen Stifte (22) im Moment des ersten Kontakts zwischen den Siegelungsköpfen (12) und der Schicht (F) aus heißsiegelbarem Material vorsieht.

15. Verfahren gemäß Anspruch 14, **dadurch gekennzeichnet, dass** eine Anomaliesituation identifiziert wird, wenn die im Moment des ersten Kontakts zwischen den Siegelungsköpfen (12) und der Schicht (F) aus heißsiegelbarem Material detektierte Winkelposition (α) nicht mit einer vorbestimmten Winkelposition (α1) korrespondiert.

## Revendications

1. Ensemble de scellage (10), comprenant
- deux corps de scellage (11) qui comprennent chacun une tête de scellage correspondante (12), lesdites têtes de scellage (12) étant orientées l'une vers l'autre le long d'au moins un segment de scellage situé entre les deux corps de scellage (11) ;
- au moins une unité de déplacement (20) reliée auxdits corps de scellage (11) et capable de déplacer lesdits corps de scellage (11) et lesdites têtes de scellage (12) ;
dans lequel ladite unité de déplacement (20) comprend une paire d'éléments rotatifs (21), chacun pouvant tourner autour d'un axe de rotation respectif (R1, R2), sur chacun desquels est montée une broche excentrique respective (22) reliée à un corps de scellage respectif (11), et qui sont configurés de manière à déplacer lesdites têtes de scellage (12) suivant un trajet de déplacement en translation linéaire pour au moins ledit segment de scellage ;
ledit ensemble de scellage étant **caractérisé en ce qu'**il comprend au moins un premier capteur de contact (40) capable de détecter la position angulaire (α) d'au moins une broche excentrique (22) au moment du premier contact entre lesdites têtes de scellage (12) et un film (F) de matériau thermoscellable.

2. Ensemble de scellage (10) selon la revendication 1, **caractérisé en ce que** chacune des têtes de scellage (12) comprend une surface de scellage (12A) disposée à l'extérieur du corps de scellage correspondant (11) et présentant un développement sensiblement plat.

3. Ensemble de scellage (10) selon la revendication 2, **caractérisé en ce que** les surfaces de scellage (12A) présentent des molettes qui peuvent être couplées mutuellement.

4. Ensemble de scellage (10) selon l'une quelconque des revendications précédentes, **caractérisé en ce qu'**il comprend, dans l'unité de déplacement (20), une unité de guidage (30) reliée à une broche excentrique (22) d'un élément rotatif respectif (21), et comprenant deux tiges de guidage (31) parallèles l'une à l'autre.

5. Ensemble de scellage (10) selon la revendication 4, **caractérisé en ce que** l'unité de guidage (30) est reliée aux broches excentriques (22) des deux éléments rotatifs (21).

6. Ensemble de scellage (10) selon la revendication 4 ou 5, **caractérisé en ce que** l'unité de guidage (30) comprend un premier corps de fixation (32), dans lequel les tiges de guidage (31) sont fixées, et un second corps coulissant (33), pourvu de deux sièges coulissants (35) capables chacun de recevoir au moins partiellement une tige de guidage (31) respective du premier corps de fixation (32).

7. Ensemble de scellage (10) selon la revendication 6, **caractérisé en ce que** le premier corps de fixation (32) est relié à la broche excentrique (22) d'un premier élément rotatif (21) et le second corps coulissant (33) est relié à la broche excentrique (22) d'un second élément rotatif (21).

8. Ensemble de scellage (10) selon l'une quelconque des revendications précédentes, **caractérisé en ce que** le corps de scellage (11) comprend un élément de rappel élastique (14) interposé entre ledit corps de scellage (11) et la tête de scellage correspondante (12).

9. Ensemble de scellage (10) selon l'une quelconque des revendications précédentes, **caractérisé en ce qu'**il comprend des moyens de confinement (20A) configurés pour confiner au moins ladite unité de déplacement (20).

10. Ensemble de scellage (10) selon la revendication 9, **caractérisé en ce que** les moyens de confinement (20A) comprennent un corps en forme de boîte fermé hermétiquement.

11. Ensemble de scellage (10) selon l'une quelconque des revendications précédentes, **caractérisé en ce que** le premier capteur de contact (40) est inclus dans un corps de scellage (11).

12. Ensemble de scellage (10) selon la revendication 11, **caractérisé en ce qu'**il comprend au moins deux premiers capteurs de contact (40) inclus dans un même corps de scellage (11).

13. Ensemble de scellage (10) selon la revendication 11, **caractérisé en ce qu'**il comprend au moins deux premiers capteurs de contact (40) inclus chacun dans un corps de scellage (11) respectif.

14. Procédé pour sceller un film (F) de matériau thermoscellable au moyen d'un ensemble de scellage (10) comprenant deux corps de scellage (11) équipés chacun d'une tête de scellage (12) respective, dans lequel lesdites têtes de scellage (12) sont orientées l'une vers l'autre le long d'au moins un segment de scellage, ledit procédé prévoyant de déplacer lesdits corps de scellage (11) et lesdites têtes de scellage (12) au moyen d'une unité de déplacement (20) comprenant une paire d'éléments rotatifs (21), chacun pouvant tourner autour d'un axe de rotation respectif (R1, R2), sur chacun desquels est montée une broche excentrique respective (22) reliée à un corps de scellage respectif (11), ladite unité de déplacement (20) étant enfermée dans des moyens de confinement (20A), dans lequel ledit déplacement permet de suivre un déplacement en translation linéaire, au moins le long dudit segment de scellage ; ledit procédé étant **caractérisé en ce qu'**il prévoit une étape de détection de la position angulaire (α) d'au moins l'une des broches excentriques (22) au moment du premier contact entre les têtes de scellage (12) et le film (F) de matériau thermoscellable.

15. Procédé selon la revendication 14, **caractérisé en ce qu'**une situation d'anomalie est identifiée lorsque la position angulaire (α) détectée au moment du premier contact entre les têtes de scellage (12) et le film (F) de matériau thermoscellable ne correspond pas à une position angulaire prédéterminée (α1).
